# EUROPÄISCHE PATENTSCHRIFT

(11) **EP 1 356 202 B1**
(45) Veröffentlichungstag und Bekanntmachung des Hinweises auf die Patenterteilung: **04.04.2007**
(21) Anmeldenummer: 02701229.3
(22) Anmeldetag: 24.01.2002
(51) Int. Cl.: F02M 61/06, F02M 61/18, F02M 51/06

(54) **BRENNSTOFFEINSPRITZVENTIL**
FUEL INJECTION VALVE
SOUPAPE D'INJECTION DE CARBURANT

(30) Priorität: 24.01.2001 DE 10103051
(43) Veröffentlichungstag der Anmeldung: 29.10.2003
(73) Patentinhaber: ROBERT BOSCH GMBH, 70442 Stuttgart (DE)
(72) Erfinder: HOHL, Guenther, 70569 Stuttgart (DE); KEIM, Norbert, 74369 Loechgau (DE)
(74) Vertreter: Körfer, Thomas
(86) Internationale Anmeldenummer: PCT/DE2002/000242
(87) Internationale Veröffentlichungsnummer: WO 2002/059477

(56) Entgegenhaltungen:
- WO-A-00/12891
- DE-A- 3 710 467
- DE-C- 932 209
- GB-A- 2 185 070
- US-A- 4 523 719

## Beschreibung

### Stand der Technik

Die Erfindung geht aus von einem Brennstoffeinspritzventil nach der Gattung des Hauptanspruchs.

Brennstoffeinspritzventile, die einen Ventilschließkörper aufweisen, an dessen stromabwärtigen Ende ein Fortsatz angeordnet ist, sind z.B. aus der DE 37 10 467 A1 bekannt. Der Ventilschließkörper wirkt mit einer Ventilsitzfläche zu einem Dichtsitz zusammen, die durch eine Ausnehmung an dem stromabwärtigen Ende des Düsenkörpers ausgebildet ist. Die Ausnehmung ist bis zu dem Übergang in eine zylindrische Öffnung des Düsenkörpers konisch ausgeformt. Zur Erzeugung einer hohen Flächenpressung an der Dichtlinie weist der Ventilschließkörper im Bereich des Dichtsitzes einen kleinen Radius als Übergang zu einem konischen Teil an dem stromabwärtigen Ende auf.

Stromabwärts des konischen Teils ist der zylindrische Fortsatz an dem Ventilschließkörper angeordnet, wobei der zylindrische Fortsatz in die Öffnung in dem Düsenkörper hineinragt. Im Ruhezustand des Brennstoffeinspritzventils ragt der Fortsatz gerade nicht aus dem stromabwärtigen Ende der Öffnung aus dem Düsenkörper heraus. Der Fortsatz bildet mit der Öffnung einen Ringspalt aus. In einer an dem stromabwärtigen Ende des Düsenkörpers angeordneten Spritzlochscheibe sind mehrere Abspritzöffnungen eingebracht, deren Eintrittsöffnungen innerhalb des Ringspalts liegen.

Nachteilig bei dem angegebenen Brennstoffeinspritzventil ist das Hineinragen des Fortsatzes in die Öffnung des Düsenkörpers. Der ausgebildete Ringspalt weist während der gesamten Öffnungsdauer des Brennstoffeinspritzventils einen konstanten Querschnitt auf. Während des Ventilnadelhubes ändert sich lediglich die Länge des Ringspalts. Der Ringspalt beeinflußt dadurch während der gesamten Abspritzdauer die Brennstoffströmung. Ein gezielter Eingriff zu Beginn des Abspritzvorgangs mit reduzierter oder vollständig aufgehobener Wirkung bei vollständig geöffnetem Brennstoffeinspritzventil ist somit nicht möglich.

Die strömungstechnisch optimierten Übergänge zwischen den einzelnen Abschnitten des Ventilschließkörpers sorgen für eine strömungsverlustarme Brennstoffströmung. Der Impuls des aus dem Brennstoffeinspritzventil austretenden Brennstoffs ist hoch. Wird der austretende Brennstoffstrahl nicht stromabwärts des Fortsatzes aufbereitet, ist eine große Eindringtiefe des abgespritzten Brennstoffs die Folge. Je nach Brennverfahren und Brennraumgeometrie wirkt sich dies nachteilig auf den Verbrennungsvorgang aus.

Ebenso nachteilig ist, daß die Beeinflussung der Strömung in einem drallbildenden Ventil mit stromaufwärts des Dichtsitzes angeordneter Drallscheibe die Ausbildung einer Drallströmung stört. Die Strömungsverluste sorgen für eine Verschlechterung der Strahlaufbereitung.

### Vorteile der Erfindung

Demgegenüber hat das erfindungsgemäße Brennstoffeinspritzventil mit den kennzeichnenden Merkmalen des Hauptanspruchs den Vorteil, daß nur zu Beginn des Abspritzvorgang die Strömung durch den Schließkörperfortsatz beeinflußt wird. Der Einfluß verringert sich mit zunehmender Öffnung des Brennstoffeinspritzventils. Dadurch wird die Ausbildung einer drallbehafteten Strömung nicht behindert. Bei vollständig geöffnetem Brennstoffeinspritzventil wirkt sich der Schließkörperfortsatz nicht auf die Strömung aus.

Besonders vorteilhaft dabei ist die Reduzierung der Eindringtiefe des nicht drallbehafteten Vorstrahls. Die verringerte Eindringtiefe sorgt speziell zu Beginn des Verbrennungsvorgangs für eine verbesserte Verteilung des Brennstoffs im Brennraum, die der Brennstoffverteilung durch die im Verlauf des Abspritzvorgangs ausgebildete Drallströmung in dem Brennstoffeinspritzventil angepaßt ist.

Weiterhin vorteilhaft ist die einfache Adaptierung an verschiedene Varianten des Brennstoffeinspritzventils. So kann zur Anpassung an einen veränderten statischen Durchfluß beispielsweise die Länge des Fortsatzes ebenfalls geändert werden, um den freien Strömungsquerschnitt bei vollständig geöffnetem Brennstoffeinspritzventil entsprechend zu vergrößern. Im Zusammenspiel mit der korrespondierenden Fläche des Ventilsitzkörpers ist auch das Verhalten während des Öffnungsvorgangs des Brennstoffeinspritzventils einfach zu verändern.

Durch die in den Unteransprüchen aufgeführten Maßnahmen ergeben sich vorteilhafte Weiterbildungen des erfindungsgemäßen Brennstoffeinspritzventils.

Der nicht in die Abspritzöffnung hineinragende Schließkörperfortsatz ermöglicht auch den Einsatz in schräg abspritzenden Brennstoffeinspritzventilen.

Im Hinblick auf die Fertigung des Brennstoffeinspritzventils ist besonders vorteilhaft, daß keine zusätzlichen Bauteile notwendig sind. Vor allem die Bearbeitung des Ventilsitzkörpers bietet die Möglichkeit die erforderliche Kontur durch das ohnehin notwendige Einschleifen der Ventilsitzfläche in dem drehbearbeiteten Rohteil zu erzeugen. Dadurch ist kein zusätzlicher Bearbeitungsschritt erforderlich und die Kosten in der Produktion können gering gehalten werden. Seitens des Ventilschließkörpers kann der Mehraufwand ebenfalls klein gehalten werden, da der Schließkörperfortsatz aus dem Ventilschließkörper herausgearbeitet werden kann.

### Zeichnung

Ein Ausführungsbeispiel eines erfindungsgemäßen Brennstoffeinspritzventils ist in der Zeichnung vereinfacht dargestellt und wird in der nachfolgenden Beschreibung näher erläutert. Es zeigt:

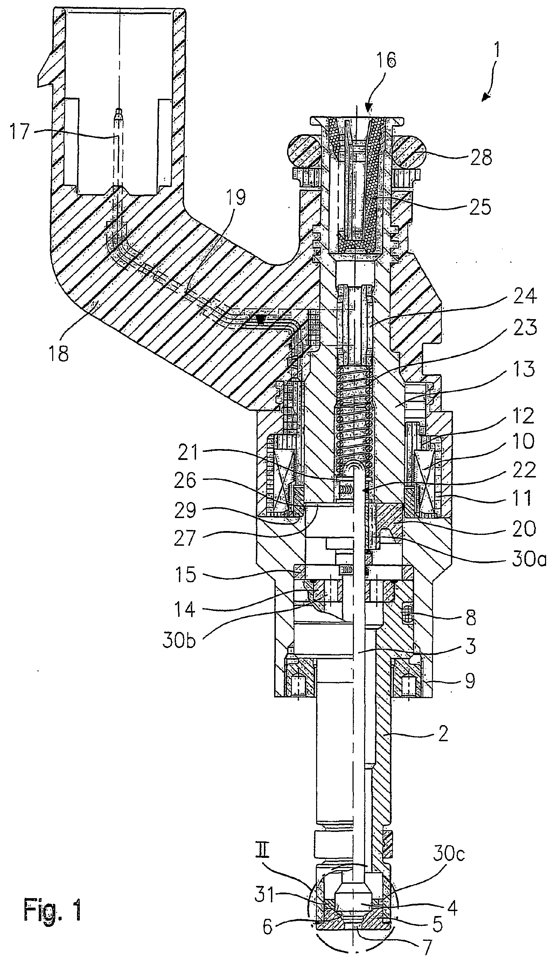

- Fig. 1: einen schematischen Teilschnitt durch ein Ausführungsbeispiel eines erfindungsgemäßen Brennstoffeinspritzventils; und
- Fig. 2: einen schematischen Teilschnitt im Ausschnitt II der Fig. 1 des erfindungsgemäßen Brennstoffeinspritzventils.

### Beschreibung des Ausführungsbeispiels

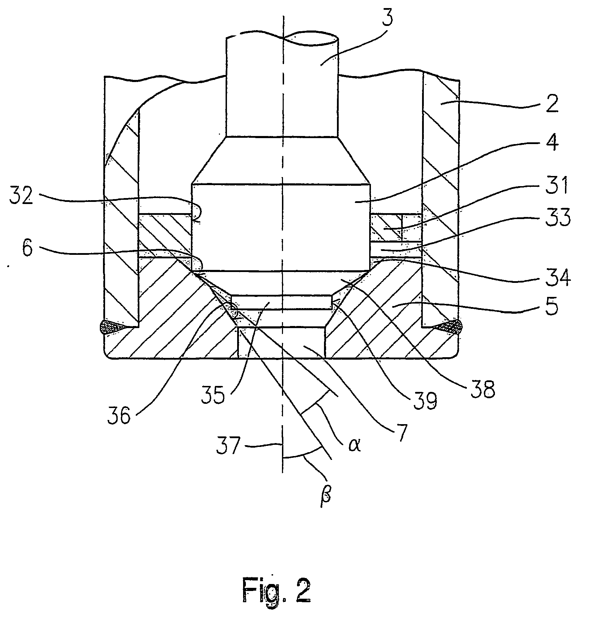

Bevor anhand von Fig. 2 ein Ausführungsbeispiel eines erfindungsgemäßen Brennstoffeinspritzventils 1 näher beschrieben wird, soll zum besseren Verständnis der Erfindung zunächst das erfindungsgemäße Brennstoffeinspritzventil 1 in einer Gesamtdarstellung bezüglich seiner wesentlichen Bestandteile kurz erläutert werden.

Das Brennstoffeinspritzventil 1 ist in der Form eines Brennstoffeinspritzventils 1 für Brennstoffeinspritzanlagen von gemischverdichtenden, fremdgezündeten Brennkraftmaschinen ausgeführt. Das Brennstoffeinspritzventil 1 eignet sich insbesondere zum direkten Einspritzen von Brennstoff in einen nicht dargestellten Brennraum einer Brennkraftmaschine.

Das Brennstoffeinspritzventil 1 umfaßt einen Düsenkörper 2, in welchem eine Ventilnadel 3 angeordnet ist. Die Ventilnadel 3 steht mit einem Ventilschließkörper 4 in Wirkverbindung, der mit einer in einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein elektromagnetisch betätigtes Brennstoffeinspritzventil 1, welches über eine Abspritzöffnung 7 verfügt. Der Düsenkörper 2 ist durch eine Dichtung 8 gegen ein Gehäuseende 9 abgedichtet. Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und das Gehäuseende 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer scheibenförmig ausgeführten Ventilnadelführung 14 geführt. Dieser ist eine Einstellscheibe 15 zugepaart, welche zur Einstellung des Ventilnadelhubs dient. Auf der stromaufwärtigen Seite der Einstellscheibe 15 befindet sich ein Anker 20. Dieser steht über einen Flansch 21 kraftschlüssig mit der Ventilnadel 3 in Verbindung, welche durch eine Schweißnaht 22 mit dem Flansch 21 verbunden ist. Auf dem Flansch 21 stützt sich eine Rückstellfeder 23 ab, welche in der vorliegenden Bauform des Brennstoffeinspritzventils 1 durch eine in den Innenpol 13 eingepreßte Hülse 24 auf Vorspannung gebracht wird.

In der Ventilnadelführung 14, im Anker 20 und einer Drallscheibe 31 verlaufen Brennstoffkanäle 30a bis 30c. In einer zentralen Brennstoffzufuhr 16 ist ein Filterelement 25 angeordnet. Das Brennstoffeinspritzventil 1 ist durch eine Dichtung 28 gegen eine nicht dargestellte Brennstoffleitung abgedichtet.

Im Ruhezustand des Brennstoffeinspritzventils 1 wird der Anker 20 über den Flansch 21 an der Ventilnadel 3 von der Rückstellfeder 23 entgegen seiner Hubrichtung so beaufschlagt, daß der Ventilschließkörper 4 an der Ventilsitzfläche 6 in dichtender Anlage gehalten wird. Bei Erregung der Magnetspule 10, baut diese ein Magnetfeld auf, welches den Anker 20 entgegen der Federkraft der Rückstellfeder 23 in Hubrichtung bewegt, wobei der Hub durch einen in der Ruhestellung zwischen dem Innenpol 13 und dem Anker 20 befindlichen Arbeitsspalt 27 vorgegeben ist. Der Anker 20 nimmt den Flansch 21, welcher mit der Ventilnadel 3 verschweißt ist, und damit die Ventilnadel 3 ebenfalls in Hubrichtung mit. Der Ventilschließkörper 4 hebt von der Ventilsitzfläche 6 ab und der Brennstoff wird von der Abspritzöffnung 7 abgespritzt. Der zu der Abspritzöffnung 7 strömende Brennstoff durchströmt stromaufwärts des Dichtsitzes die Drallscheibe 31 in der die Brennstoffströmung so umgelenkt wird, daß sie mit einer Geschwindigkeitskomponente in Umfangsrichtung zu dem Dichtsitz hin strömt.

Wird der Spulenstrom abgeschaltet, fällt der Anker 20 nach genügendem Abbau des Magnetfeldes durch den Druck der Rückstellfeder 23 auf den Flansch 21 vom Innenpol 13 ab, wodurch sich die Ventilnadel 3 entgegen der Hubrichtung bewegt. Dadurch setzt der Ventilschließkörper 4 auf der Ventilsitzfläche 6 auf, und das Brennstoffeinspritzventil 1 wird geschlossen.

In Fig. 2 ist der Bereich des Dichtsitzes des erfindungsgemäßen Brennstoffeinspritzventils 1 detailliert dargestellt. Der Ventilsitzkörper 5 ist an dem stromabwärtigen Ende in den Düsenkörper 2 eingesetzt und über eine Schweißverbindung fixiert. In dem Ventilsitzkörper 5 ist eine Ausnehmung eingebracht, deren stromaufwärtiger Teil die Ventilsitzfläche 6 ausbildet. Auf der Ventilsitzfläche 6 ist im Ruhezustand des Brennstoffeinspritzventils 1 der mit der Ventilnadel 3 in Wirkverbindung stehende Ventilschließkörper 4 in dichtender Anlage gehalten. Der Ventilschließkörper 4 ist in einer Führungsausnehmung 32 der Drallscheibe 31 geführt. Zur Ausbildung einer Drallströmung bei geöffnetem Brennstoffeinspritzventil 1 sind in die Drallscheibe 31 Drallkanäle 33 eingebracht, die mit einer Tangentialkomponente in eine Drallkammer 34 ausmünden und über die Brennstoffkanäle 30c mit Brennstoff versorgt werden. Die Drallkammer 34 ist beispielsweise zwischen dem stromaufwärtigen Ende der Ausnehmung des Ventilsitzkörpers 5 und dem Ventilschließkörper 4 ausgebildet. An dem stromabwärtigen Ende des Ventilschließkörpers 4 ist ein Schließkörperfortsatz 35 angeordnet.

Die Ausnehmung des Ventilsitzkörpers 5 ist durchgehend ausgeführt und gliedert sich in eine am stromaufwärtigen Ende ausgebildete Ventilsitzfläche 6 und eine sich daran anschließende zweite Fläche 36, die in stromabwärtiger Richtung in die Abspritzöffnung 7 übergeht. Die Ventilsitzfläche 6 und die zweite Fläche 36 schließen mit der Mittelachse 37 des Brennstoffeinspritzventils 1 unterschiedliche Winkel ein, wobei ein erster Winkel α der Ventilsitzfläche 6 mit der Mittelachse 37 größer ist als ein zweiter Winkel β der zweiten Fläche 36 mit der Mittelachse 37 des Brennstoffeinspritzventils 1. Die Abspritzöffnung 7 ist koaxial zu der Mittelachse 37 des Brennstoffeinspritzventils 1 und zylindrisch. Die Ventilsitzfläche 6 kann beispielsweise durch Einschleifen aus einer durch Drehbearbeitung erhaltenen Rohform erzeugt werden. Die drehbearbeitete Fläche schließt dabei denselben Winkel β mit der Mittelachse 37 des Brennstoffeinspritzventils 1 ein, den die zweite Fläche 36 mit der Mittelachse 37 einschließt.

Der Ventilschließkörper 4 weist einen zylindrischen Teil auf, der die Führungsausnehmung 32 der Drallscheibe 31 durchdringt und mit der Führungsausnehmung 32 einen hydraulisch dichtenden Spalt ausbildet. An den zylindrischen Teil schließt ein sich radial verjüngender Teil an, der vorzugsweise die Form eines Kegelstumpfs aufweist. An dem stromabwärtigen Ende des Ventilschließkörpers 4 ist der Fortsatz 35 angeordnet. Der Fortsatz 35 ist vorzugsweise koaxial zur Mittelachse 37 des Brennstoffeinspritzventils 1 und weist eine vorzugsweise zylinderförmige Gestalt auf. Die radiale Ausdehnung des Fortsatzes 35 ist größer als die radiale Ausdehnung der Abspritzöffnung 7 und kleiner als die größte radiale Ausdehnung der zweiten Fläche 36. Die Höhe des kegelstumpfförmigen Teils 38 des Ventilschließkörpers 4 und die axiale Ausdehnung des Schließkörperfortsatzes 35 sind zusammen so bemessen, daß bei geschlossenem Brennstoffeinspritzventil 1 das stromabwärtige Ende des Schließkörperfortsatzes 35 den Ventilsitzkörper 5 nicht berührt. Zur Anpassung des Brennstofeinspritzventils 1 an verschiedene Varianten kann der Fortsatz 35 auch nicht zylindrisch ausgeführt sein.

Der Winkel, den die Mantelfläche des kegelstumpfförmigen Teils 38 mit der Mittelachse 37 des Brennstoffeinspritzventils 1 einschließt, ist größer als der von der Ventilsitzfläche 6 mit der Mittelachse 37 eingeschlossene erste Winkel α, wodurch ein sich in Strömungsrichtung öffnender Spalt zwischen der Ventilsitzfläche 6 und dem kegelstumpfförmigen Teil 38 gebildet wird. Zwischen der Mantelfläche 39 des Schließkörperfortsatzes 35 und der zweiten Fläche 36 wird ein sich in Strömungsrichtung verjüngender Spalt ausgebildet, dessen kleinster durchströmter Querschnitt größer ist als der die Durchflußmenge begrenzende Querschnitt, insbesondere bei vollständig geöffnetem Brennstoffeinspritzventil 1.

Beim Öffnen des Brennstoffeinspritzventils 1 tritt zunächst der Brennstoff aus, der sich zum Öffnungszeitpunkt in der Drallkammer 34 befand. Dieser Teil des Brennstoffs, der vor der Öffnung des Brennstoffeinspritzventils 1 die Geschwindigkeit Null hat, strömt unverdrallt durch den sich öffnenden Spalt zwischen Ventilsitzkörper 5 und Ventilschließkörper 4. Wegen des Winkelunterschiedes zwischen der Ventilsitzfläche 6 und der zweiten Fläche 36 wird der Schließkörperfortsatz 35 angeströmt. Dabei verliert die Brennstoffströmung einen Teil ihres Impulses. Der austretende Brennstoff dringt daher nicht so weit in den Brennraum ein.

Der während des Abspritzvorgangs nachströmende Brennstoff wird durch die in der Drallscheibe 31 angeordneten Drallkanäle 33 mit Drall beaufschlagt. Aufgrund der auftretenden Zentrifugalkräfte wird der nachtströmende Brennstoff daher nach außen gedrückt. Die Strömung folgt der Kontur der Ausnehmung des Ventilsitzkörpers 5. Der Brennstoff strömt an dem Schließkörperfortsatz 35 vorbei, ohne daß die Brennstoffströmung umgelenkt wird. Der Schließkörperfortsatz 35 verursacht deswegen keine Strömungsverluste und der Drall der Brennstoffströmung bleibt erhalten. Der mit Drall abgespritzte Brennstoff wird am stromabwärtigen Ende der Abspritzöffnung 7 aufgefächert und auf einem Kegelmantel abgespritzt. Der zwischen dem Schließkörperfortsatz 35 und dem Ventilsitzkörper 5 durchströmbare Querschnitt ist größer als der Zumeßquerschnitt des Brennstoffeinspritzventils 1, der sich beispielsweise als Summe der Querschnitte der Drallkanäle 33 ergeben kann.

## Patentansprüche

1. Brennstoffeinspritzventil für Brennstoffeinspritzanlagen von Brennkraftmaschinen mit einem Ventilschließkörper (4), der mit einer Ventilnadel (3) in Wirkverbindung steht und der mit einer in einer Ausnehmung eines Ventilsitzkörpers (5) angeordneten Ventilsitzfläche (6) zu einem Dichtsitz zusammenwirkt, und zumindest einer in dem Ventilsitzkörper (5) angeordneten Abspritzöffnung (7),
wobei zwischen der Ventilsitzfläche (6) und der Abspritzöffnung (7) durch die Ausnehmung eine zweite Fläche (36) ausgebildet ist, die mit der Mittelachse (37) des Brennstoffeinspritzventils (1) einen spitzeren Winkel (β) einschließt als die Ventilsitzfläche (6),
wobei an dem stromabwärtigen Ende des Ventilschließkörpers (4) ein Schließkörperfortsatz (35) angeordnet ist, dessen Mantelfläche (39) mit der angrenzenden Kontur des Ventilschließkörpers (4) einen stumpfen Winkel bildet, und
wobei der Schließkörperfortsatz (35) des Ventilschließkörpers (4) eine größere radiale Ausdehnung aufweist, als die Abspritzöffnung (7), die zylindrisch und koaxial zu der Mittelachse (37) ist.

2. Brennstoffeinspritzventil nach Anspruch 1,
**dadurch gekennzeichnet,**
**dass** eine Verlängerung der Mantelfläche (39) des Schließkörperfortsatzes (35) des Ventilschließkörpers (4) in stromabwärtiger Richtung mit dem Ventilsitzkörper (5) eine Schnittlinie bildet, die vollständig auf der zweiten Fläche (36) des Ventilsitzkörpers (5) liegt.

3. Brennstoffeinspritzventil nach Anspruch 1 oder 2,
**dadurch gekennzeichnet,**
**dass** die axiale Ausdehnung des Schließkörperfortsatzes (35) kleiner ist, als der Abstand der Verbindungslinie von Ventilschließkörper (4) und Schließkörperfortsatz (35) von der zweiten Fläche (36) bei vollständig abgehobenem Ventilschließkörper (4).

4. Brennstoffeinspritzventil nach einem der Ansprüche 1 bis 3,
**dadurch gekennzeichnet,**
**dass** der Ventilschließkörper (4) stromabwärts des Dichtsitzes einen kegelstumpfförmigen Teil (38) aufweist, dessen Mantelfläche mit der Mittelachse (37) des Brennstoffeinspritzventils (1) einen Winkel einschließt, der größer als der Winkel (α) zwischen Mittelachse (37) und der Ventilsitzfläche (6) ist.

5. Brennstoffeinspritzventil nach einem der Ansprüche 1 bis 4,
**dadurch gekennzeichnet,**
**dass** der zwischen dem stromabwärtigen Ende des Schließkörperfortsatzes (35) und dem Ventilsitzkörper (5) engste ausgebildete durchströmbare Querschnitt größer ist, als ein zur Zumessung der Abspritzmenge ausgebildeter Querschnitt.

## Claims

1. Fuel injection valve for fuel injection systems of internal combustion engines having a valve closing body (4) which is operatively connected to a valve needle (3) and interacts with a valve seat face (6), which is arranged in a recess of a valve seat body (5), to form a sealing seat, and having at least one spray opening (7) arranged in the valve seat body (5),
a second face (36) being formed between the valve seat face (6) and the spray opening (7) by the recess, said second face (36) enclosing a more acute angle (β) with the central axis (37) of the fuel injection valve (1) than the valve seat face (6),
a closing body extension (35) being arranged at the downstream end of the valve closing body (4), the lateral surface (39) of which closing body extension (35) forms an obtuse angle with the adjoining contour of the valve closing body (4), and
the closing body extension (35) of the valve closing body (4) having a greater radial extent than the spray opening (7) which is cylindrical and coaxial with respect to the central axis (37).

2. Fuel injection valve according to Claim 1,
**characterized**
**in that** an elongation of the lateral surface (39) of the closing body extension (35) of the valve closing body (4) in the downstream direction forms a line of intersection with the valve seat body (5), which line of intersection lies entirely on the second face (36) of the valve seat body (5).

3. Fuel injection valve according to Claim 1 or 2,
**characterized**
**in that** the axial extent of the closing body extension (35) is smaller than the distance from the connecting line of the valve closing body (4) and closing body extension (35) to the second face (36) when the valve closing body (4) is completely lifted.

4. Fuel injection valve according to one of Claims 1 to 3,
**characterized**
**in that** the valve closing body (4) has a frustoconical part (38) downstream of the sealing seat, the lateral surface of which frustoconical part (38) encloses an angle with the central axis (37) of the fuel injection valve (1), said angle being greater than the angle (α) between the central axis (37) and the valve seat face (6).

5. Fuel injection valve according to one of Claims 1 to 4,
**characterized**
**in that** the narrowest cross section through which flow can pass between the downstream end of the closing body extension (35) and the valve seat body (5) is larger than a cross section formed for metering the injection quantity.

## Revendications

1. Injecteur de carburant pour des dispositifs d'injection de carburant dans des moteurs à combustion interne, comportant un obturateur d'injecteur (4) en liaison active avec une aiguille d'injecteur (3) et coopérant avec une portée de siège d'injecteur réalisée dans un évidement d'un corps de siège d'injecteur (5) pour donner un siège d'étanchéité, avec au moins un orifice d'éjection (7) percé dans le corps de siège d'injecteur (5), dans lequel :
- entre la portée de siège d'injecteur (6) et l'orifice d'éjection (7) l'évidement réalise une seconde portée (36) qui forme avec l'axe médian (37) de l'injecteur de carburant (1) un angle (β) plus aigu que celui que forme avec cet axe la portée de siège d'injecteur (6),
- à l'extrémité aval, par rapport à l'écoulement, de l'obturateur (4), celui-ci porte un appendice l'obturateur (35) dont la surface externe (39) forme un angle obtus avec le contour qui l'entoure l'obturateur (4), et
- l'appendice de corps de fermeture (35) de l'obturateur (4) présente une étendue radiale supérieure à celle de l'orifice d'éjection (7) qui est cylindrique et coaxial à l'axe médian (37).

2. Injecteur de carburant selon la revendication 1,
**caractérisé en ce qu'**
une prolongation vers l'aval de la surface externe (39) de l'appendice (35) de l'obturateur (4), coupe le corps de siège d'injecteur (5) selon une ligne qui se trouve entièrement sur la seconde portée (36) du corps de siège d'injecteur (5).

3. Injecteur de carburant selon la revendication 1 ou 2,
**caractérisé en ce que**
l'étendue axiale de l'appendice l'obturateur (35) est plus petite que la distance séparant la seconde portée (36) de la ligne reliant l'obturateur d'injecteur (4) à son appendice (35), quand l'obturateur (4) est totalement soulevé.

4. Injecteur de carburant selon une des revendications 1 à 3,
**caractérisé en ce que**
l'obturateur d'injecteur (4) présente en aval du siège d'étanchéité une partie (38) en forme de tronc de cône dont la surface externe forme avec l'axe médian (37) de l'injecteur de carburant (1) un angle supérieur à l'angle (α) que forme l'axe médian (37) et la portée de siège d'injecteur (6) .

5. Injecteur de carburant selon une des revendications 1 à 4,
**caractérisé en ce que**
la section traversable la plus étroite existant entre l'extrémité aval de l'appendice l'obturateur (35) et le corps de siège d'injecteur (5) est supérieure à une section réalisée pour doser le débit projeté.
